# EUROPEAN PATENT APPLICATION

(11) **EP 4 647 892 A1**
(43) Date of publication of application: **12.11.2025**
(21) Application number: 24175071.0
(22) Date of filing: 09.05.2024
(51) Int. Cl.: G06F 3/16, H04R 1/10

(54) **SYSTEMS AND METHODS FOR CONFIGURING DEVICE FEATURES BASED ON DETECTED DEVICE STATE**

(71) Applicant: Bang & Olufsen A/S, 7600 Struer (DK)
(72) Inventor: MAGNUSSEN, Magnus Søgaard, 7600 Struer (DK); BREINBJERG, Steffen, 7600 Struer (DK)
(74) Representative: Shipp, Nicholas

(57) **Abstract**

Electronic device (100) comprises a plurality of sensors (220) and at least one processor (340) adapted to receive first type of data from at least one first sensor (320) and second type of data from at least one second sensor (344) and, from the first type of data and the second type of data, to: determine a current use state of the electronic device, and compare the current use state to a previous use state of the electronic device, if the current use state is different from the previous use state, change a status of at least one feature of the electronic device based on the current use state, and if the current use state is the same as the previous use state, maintain a status of at least one feature of the electronic device.

## Description

### TECHNICAL FIELD

Embodiments of the present disclosure relate generally to consumer electronics devices and more particularly to systems and methods for configuring features of a consumer electronics device based on a detected state of the device.

### BACKGROUND

Electronic device management is conventionally accomplished by a user manually controlling the power and features of the device through inputs such as buttons, dials, and touch surfaces or touch screens. This manual control of device features can be cumbersome and detract from the overall user experience when interacting with the electronic device.

Conventionally, users are often required to adjust or otherwise control features before, during, and after each use. This issue affects wireless headphones in particular, as headphones (and often ear buds as well) require a series of manual user steps to configure the headphones before, during, and after each active use.

There are known approaches relating to automatically enabling or disabling features of, or powering on or off, electronic devices. These approaches typically are rudimentary, require the use of multiple devices (e.g., interaction with a smart phone or other device as the source of content delivered to, e.g., headphones or earphones), or are prone to errors. Common errors are false positives or negatives in use state detection, such as a smart phone disabling audio output to a set of headphones when mistakenly determining that the headphones are not in use. Though some errors may be insignificant or only mildly irritating, others can be problematic or disruptive, such as turning off sound if incorrectly detecting lack of use during an important call or meeting, or mistakenly disabling a user interface feature when a user needs to quickly change a setting (e.g., volume).

Accordingly, needs remain to address these deficiencies.

### SUMMARY

Various embodiments of the present disclosure aim to address the above problems, including by making electronic devices more robust with respect to use and handling so that the devices are less prone to false positives and negatives in use state detection and other common errors. Accordingly, this disclosure relates to systems and methods for improving the robustness of use state detection of an electronic device.

In one embodiment, a system for improving robustness of use state detection of an electronic device comprises a plurality of sensors comprising at least one first sensor arranged to obtain a first type of data about the electronic device, and at least one second sensor arranged to obtain a second type of data about the electronic device, the second type of data being different from the first type of data. The system also comprises at least one processor coupled to receive the first type of data from the at least one first sensor and the second type of data from the at least one second sensor and, from the first type of data and the second type of data, to: determine a current use state of the electronic device, and compare the current use state to a previous use state of the electronic device, if the current use state is different from the previous use state, change a status of at least one feature of the electronic device based on the current use state, and if the current use state is the same as the previous use state, maintain a status of at least one feature of the electronic device.

In another embodiment, a method for improving robustness of use state detection of an electronic device comprises obtaining a first type of data about the electronic device; obtaining a second type of data about the electronic device, the second type of data being different from the first type of data; determining a current use state of the electronic device from the first type of data and the second type of data; comparing the current use state to a previous use state of the electronic device; if the current use state is different from the previous use state, changing a status of at least one feature of the electronic device based on the current use state; and if the current use state is the same as the previous use state, maintaining a status of at least one feature of the electronic device.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a perspective view of headphones according to an embodiment.
FIG. 2A is a perspective view of an earphone unit of headphones according to an embodiment.
FIG. 2B is a partial perspective view of the earphone unit of FIG. 2A.
FIG. 3 is a block diagram of a system according to an embodiment.
FIG. 4 is a functional diagram according to an embodiment.
FIG. 5 is a flowchart of a method according to an embodiment.
FIGS. 6A and 6B are a flowchart of a method for detecting use states according to an embodiment.

While various embodiments are amenable to various modifications and alternative forms, specifics thereof have been shown by way of example in the drawings and will be described in detail. It should be understood, however, that the intention is not to limit the claims to the particular embodiments described. On the contrary, the intention is to cover all modifications, equivalents, and alternatives falling within the spirit and scope of the subject matter as defined by the claims.

### DETAILED DESCRIPTION

Embodiments of the present disclosure are related to making electronic devices more robust with respect to handling and use. This can include, in some embodiments, reducing or eliminating false positives and negatives in use state detection. Embodiments thereby can provide more accurate automatic activation, configuration, or deactivation of one or more features of the device based on a detected use state or use case.

As used herein, "use state" refers to an operational state of a device with respect to a user of the device, such as a set of headphones. A use state can include a wear state, i.e., whether a set of headphones is being worn, or worn as generally intended (e.g., with each earcup worn over an ear with the headband extending therebetween worn over the top of the head of a user). Thus, a use state can be on and unworn, or on and partially worn. A use state can also include an operational state (e.g., on or off) or a setting state, such as whether active noise cancelation (ANC) is on or what mode or setting of ANC is selected. Use state will generally be used herein in a broad sense (incorporating wear state, operational state, and setting state, or at least a plurality of these), though in some instances or examples a wear state or operational state may also be mentioned or discussed specifically.

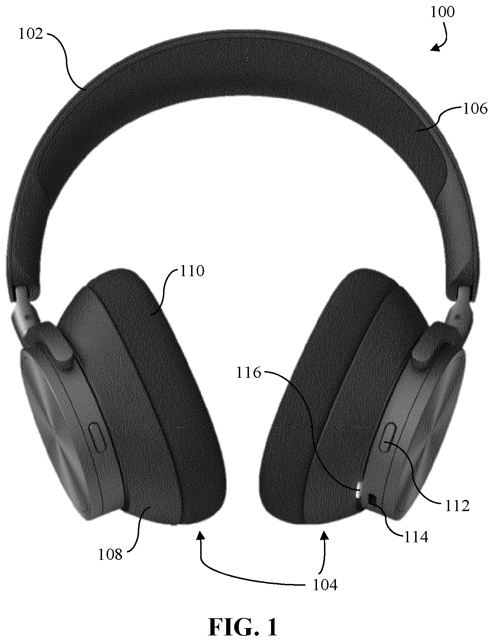

Referring to FIG. 1, a set of headphones 100 is depicted according to an embodiment. Headphones 100 comprise a headband 102 pivotally or flexibly coupling earphone units 104 at opposing ends. Headband 102 can be adjustable such that the length of headband 102 between earphone units 104 can be shortened or lengthened or otherwise adjusted to better or more comfortably fit a particular user. Headband 102 can optionally include a padded portion 106 to further improve user comfort when worn.

Each earphone unit 104 comprises an earcup 108 and an ear cushion 110. Earcups 108 house electrical components, such as speaker drivers and related circuitry, configured to produce sound and project the sound within ear cushions 110, towards the ears of a user when headphones 100 are worn.

One or more exterior surfaces or parts of each earcup 108 can include at least one input 112 that can be used to receive user input. Input 112 can be one or more of buttons, sliders, touch sensitive surfaces, and the like. Input 112 can be configured to receive user input to control, e.g., power, volume, noise cancelation, fit, comfort, sound proofing, and other features of headphones 100. Input 112 can be located anywhere on headphones 100 such that input 112 remains accessible for manual user input when worn or needed by a user.

In some embodiments, earcups 108 can further include one or more input ports 114 configured to receive a cable connector and one or more indicator lights 116 configured to convey status information of headphones 100. These input ports 114 can include audio ports or jacks, such as USB or minijack as examples. The arrangement of input 112, input ports 114, and indicator lights 116 can vary between earcups 108 (e.g., left vs. right) or on different embodiments or versions of headphones 100.

Though headphones 100 of the embodiment of FIG. 1 (and other embodiments discussed herein) generally relate to or discuss devices that are worn over the ears of a user, this disclosure and the various embodiments are not limited to over-ear headphones. Thus, aspects of the disclosure can also relate to in-ear earphones (often referred to as "ear buds"), earphones worn on the ears without completely covering the ears, one or more earphone units or components arranged within other devices that position the earphone(s) relative to one or more ears of a user (such as headsets, or wearables such as hats, glasses, or headbands), and other audio, visual, or audio/visual (A/V) devices unless explicitly stated otherwise herein.

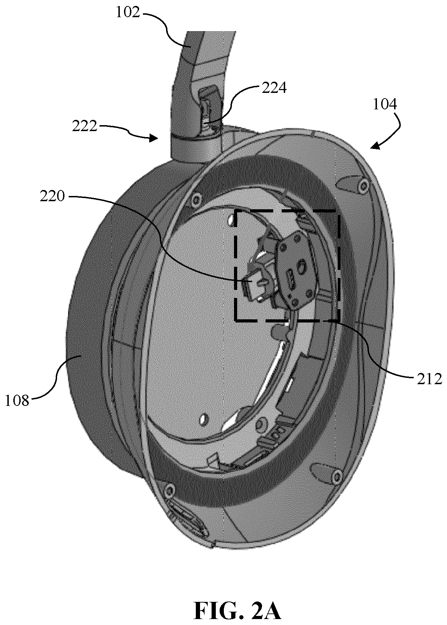

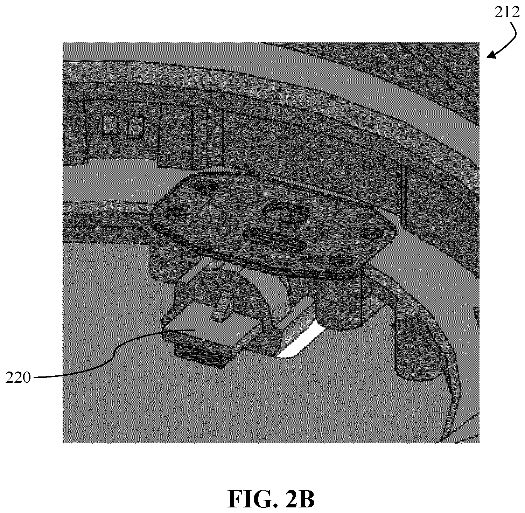

Referring to FIGS. 2A - 2B, an interior portion of earphone unit 104 coupled to headband 102 is depicted in FIG. 2A according to an embodiment. FIG. 2B is a rotated close-up perspective view of region 212 of earphone unit 104 in FIG. 2A. Earphone unit 104 includes earcup 108 configured to contain a speaker driver (not shown), at least one sensor 220, and processing hardware (not shown). Earphone unit 104 is coupled as previously mentioned to headband 102 via a coupling mechanism 222 that includes a hinge 224 in this embodiment. Other coupling mechanisms can be used in other embodiments.

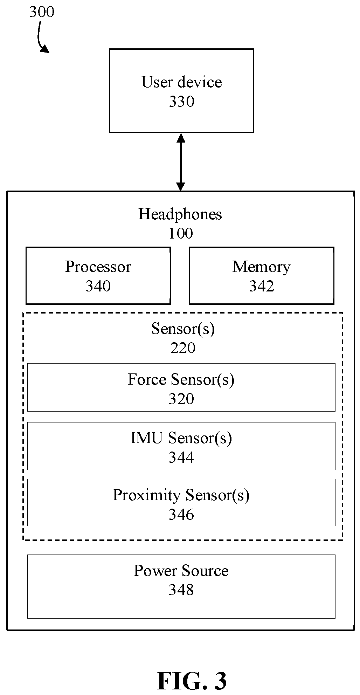

In embodiments, at least one sensor 220 includes a force sensor (see 320 in FIG. 3) that is configured to detect at least one characteristic related to headphones 100, such as a force exerted on one or both of earphone units 104 by headband 102 or another object. For example, when headphones 100 are worn on a user's head, headband 102 is biased to flex or bend outwardly in order to exert a generally inward force (i.e., towards the head or ears of a user) on each earphone unit 104. This bias provides a good "seal" of ear cushions 110 around each ear of the user for a better audio experience (e.g., improved noise canceling) but is not so strong that it interferes with a comfortable fit.

Sensor(s) 220 is/are communicatively coupled to on-board processing hardware that can comprise at least one processor and memory, on which can reside firmware/software. In some embodiments, data collected by sensor(s) 220 can be, instead or additionally, communicated to a server or user device communicatively coupled to and remote from headphones 100 (e.g., a smart phone).

In some embodiments, one or more additional sensor modalities can be used with or instead of a force sensor, such as an inertial measurement unit (IMU) sensor to sense orientation of motion, an accelerometer to sense acceleration, a gyroscope to sense orientation, a magnetometer or Hall-effect sensor to sense magnetic field, a proximity sensor, a capacitive touch sensor to tense touch, a millimeter (MM) wave sensor to sense reflected signals that indicate angle, range, and velocity of sensed objects, an infrared sensor to sense heat radiation, a temperature sensor to sense temperature, a humidity sensor to sense humidity, or one or more other sensors known to those of skill in the art. In embodiments in which a plurality of sensor modalities is implemented, so-called "sensor fusion" can be implemented by or for headphones 100. Sensor fusion combines data from multiple sensors or sources such that processing of the data reduces uncertainty or provides additional information than a single sensor modality might alone.

Thus, a first sensor 220 of a first sensor modality can be arranged in or on headphones 100 to obtain a first type of data about headphones 100, with the first type of data being that of the first sensor modality (e.g., force sensor data, IMU sensor data, temperature sensor data). A second sensor 220 of a second sensor modality can be arranged in or on headphones 100 to obtain a second type of data about headphones 100, with the second type of data being that of the second sensor modality (e.g., IMU sensor data, acceleration sensor data, Hall sensor data). The first sensor modality can be different from the second sensor modality, and there can be a plurality of first sensors 220 or second sensors 220 or both. Sensor fusion can be applied to some or all of the data (e.g., sensor data) of the first type and the second type. In some embodiments, machine learning or artificial intelligence techniques can be applied to some or all of the data or types of data (as will be discussed more herein below). In still other embodiments, a third or further (fourth, fifth, etc.) sensor modality also can be used to obtain a third type of data, etc. The first, second, and third types of data all can be different (e.g., force sensor data, IMU sensor data, capacitive sensor data), or some can be the same. In any embodiment related to headphones 100 or, similarly, earphones, the sensor modalities in one earphone unit 104 can be the same or different from those of the other earphone unit 104, or sensors 220 can be omitted from one or both earphone units. Sensors 220 also or instead can be included in or on headband 102 or elsewhere in or on headphones 100.

Referring to FIG. 3, a block diagram of a system 300 for detecting a use state of headphones 100 is depicted according to an embodiment. System 300 comprises headphones 100 and a user device 330. Headphones 100 (which can be the same as headphones 100 of FIGS. 1-2B) generally comprise a processor 340, memory 342, one or more force sensors 320, one or more IMU sensors 344, one or more proximity sensors 346, optionally one or more sensors of one or more other sensor modalities, and at least one power source 348.

System 300 can be used to determine a use state of headphones 100 (e.g., worn for active use vs. not worn vs. partially worn) that can be used to configure one or more features or operations of headphones 100. As discussed elsewhere herein, features and concepts of this disclosure mentioned in examples related to headphones 100 can be used in or with, or applied to, other devices, such as in-ear earphones and other electronic devices having user interface features for which it may be desired or helpful to determine a use state and configure or control one or more features or operations based on the determined use state. Thus, in various embodiments headphones 100 instead can be any electronic device that incorporates one or more earphone units, including at least in-ear earbuds or on-ear headphones. Headphones 100 can instead comprise a different wearable electronic device, such as a virtual reality (VR) headset, an augmented reality (AR) headset, a smart watch, smart glasses, smart jewelry or another smart accessory, a gaming device, a medial or health device, or some other electronic device worn or used on or close to a user's body or body part.

Processor 340 (as well as any other processor, processing device, or engine discussed herein) can be any programmable device that accepts digital data as input, is configured to process the input according to instructions or algorithms and provides results as outputs. In an embodiment, processor 340 can be a central processing unit (CPU) or a microcontroller or microprocessor configured to carry out the instructions of a computer program. Processor 340 is therefore configured to perform at least basic arithmetical, logical, and input/output operations.

In some embodiments, processor 340 can comprise or implement one or more engines. The use of the term "engine" herein refers to any hardware or software that is constructed, programmed, configured, or otherwise adapted to autonomously carry out a function or set of functions, such as detecting user device 330. Processors and engines as referred to herein are any real-world devices, components, or arrangements of components implemented using hardware, such as by an application specific integrated circuit (ASIC) or field programmable gate array (FPGA), for example, or as a combination of hardware and software, such as by a microprocessor system and a set of program instructions that adapt the processor or engine to implement the particular functionality, which (while being executed) transform the microprocessor system into a special-purpose device. A processor or engine can also be implemented as a combination of the two, with certain functions facilitated by hardware alone, and other functions facilitated by a combination of hardware and software.

In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, any processor or engine discussed herein can be realized in a variety of physically realizable configurations and should generally not be limited to any particular implementation exemplified herein, unless such limitations are expressly called out.

In embodiments, each processor or engine can itself be composed of one or more sub-processors or sub-engines, each of which can be regarded as a processor or engine in its own right. Moreover, in the embodiments described herein, processor 340 can correspond to defined autonomous functionality, wherein a use state of headphones 100 can be determined without need for additional manual input from the user. It should be understood, however, that in other contemplated embodiments, functionality can be distributed to more than one processor or engine, regardless of any example description or depiction herein. Likewise, in other contemplated embodiments, multiple defined functionalities may be implemented by a single processor or engine that performs those multiple functions, possibly alongside other functions, or distributed differently among a set of processors or engines than specifically illustrated in the examples herein.

Therefore, headphones 100 can comprise any number or type of processor 340. In one embodiment, processor 340 can be located within or local to headphones 100. In alternate embodiments, processor 340 can operate on a device or server remote from headphones 100, such as on user device 330 (e.g., as part of an application operating or presented on user device 330) or in the cloud.

Memory 342 can comprise volatile or non-volatile memory as required by the coupled processor 340 to not only provide space to execute the instructions or algorithms, but to provide the space to store the instructions themselves. In embodiments, volatile memory can include random access memory (RAM), dynamic random access memory (DRAM), or static random access memory (SRAM), for example. In embodiments, non-volatile memory can include read-only memory (ROM), flash memory, ferroelectric RAM, hard disk, or optical disc storage, for example. The foregoing lists in no way limit the type of memory that can be used, as these embodiments are given only by way of example and are not intended to limit the scope of the present disclosure.

Power source 348 is typically a rechargeable battery. Some embodiments may use single-use, replaceable batteries. Still other embodiments may have the ability to receive power directly from an AC or DC source, such as a wall outlet, laptop, computer, tablet, video display device (such as an in-flight airplane entertainment system), or some other source.

Operating all of the components of headphones 100, all of the time, can consume significant battery life, such that it can be useful to use one more of the sensors 220 to detect a use state of headphones 100 in order to determine which feature(s) to provide active power to and which features (including headphones 100 overall) may be disabled because they are inactive or not needed. Furthermore, it also can be useful to detect a use state of headphones 100 in order to determine whether or not user input to headphones 100 (or output from headphones 100) is desired or accidental.

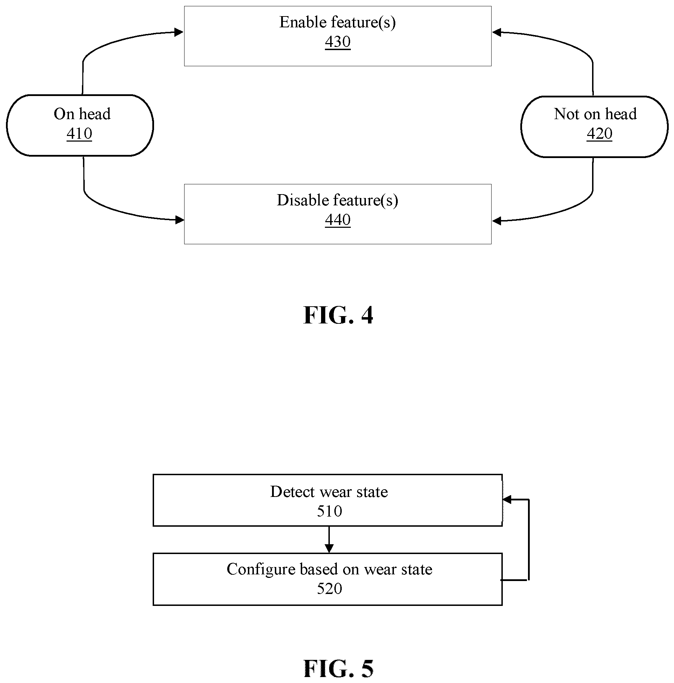

Thus, in various embodiments one or more of sensors 220 (or other sensors, components, or devices) that may be part of or used with headphones 100 in other embodiments, can be used to detect a use state of headphones 100. Referring also to FIG. 4, the detected use state 410 or 420 of headphones 100 can be used to determine, change, or customize one or more features of headphones 100 at 430 and 440. In FIG. 4, one or more features are depicted as being enabled at 430 if headphones are determined to be on a user's head at 410, and vice-versa at 420 and 440. This can be reversed in other embodiments, or some features may be enabled while others are disabled at the same time, at 430, if wear is detected at 410. For example, if headphones 100 are detected on a user's head at 410, then an LED on headphones 100 might be turned off and sound may be output to or by headphones 100. In another example, if headphones 100 are not detected as being word on a user's head at 420, then an LED can be turned on and Bluetooth can be turned off

These examples are only some possible results of detection of wear, or not, of headphones 100. Other examples of features that may be activated or deactivated, alone or in any combination with any other features discussed herein throughout, include whether or which sensors 220 are active; whether a status LED or other indicator is on, off, operating intermittently (e.g., flashing), or changing color; whether a user interface is or should be active to accept user input or types of user input or to provide or display output to a user; whether noise cancelling is on, off, or set in a particular way (e.g., in transparency mode); a use or output mode (e.g., running mode, in which the sound of a user's feet hitting the ground is minimized or removed via active noise cancelation, ANC); a volume setting; an input or output source; or some other setting or feature. Additional examples will be provided below, as it can be possible to implement various levels of complexity or sophistication of the enabling 430 or disabling 440 of one or more features based on various factors that will be further explained.

In various embodiments, one or more of sensors 220 can be configured to detect a use state of headphones 100 at 410. For example, if force on headband 102 consistent with headphones 100 being placed or worn on a user's head is sensed by force sensor 320, then processor 340 can be configured to activate at least one IMU sensor 344 such that IMU sensor 344 can be used to detect additional information related to usage of headphones 100, like a specific force, rate, or orientation of the force detected by force sensor 320. If IMU sensor 344 senses that the force detected is localized to headband 102 and headband 102 extends sufficiently in comparison to a threshold value, then processor 340 can activate other corresponding sensors, such as proximity sensors 346.

In another example in which there is at least one IMU sensor 344 in each earphone unit 104 of headphones 100, data from the at least two IMU sensors 344 can be considered. In one embodiment, this can comprise comparing the data from the two IMU sensors 344 in order to detect when earphone units 104 are facing each other. In some implementations, the at least two IMU sensors 344 can also provide data indicating relative positioning in order to determine whether or not, or an extent to which, headband 102 is extended. Still other embodiments can additionally use data from force sensor 320.

In one example, force sensor 320 can be configured to remain continuously active, even when headphones 100 are otherwise powered down or off. Advantageously, force sensor 320 uses very little power, especially in comparison to IMU sensors 344 and proximity sensors 346, and therefore such a configuration can enable optimal use for the user without posing a substantial drain on battery life of the headphones 100. In alternate examples, force sensor 320 can be configured to power down with headphones 100, or other sensors can be configured to remain on (such as IMU sensor 344, proximity sensor 346, etc.). With one or more of sensors 220 configured to remain active, life of power source 348 can be managed and preserved while maintaining the ability to detect any user handling of headphones 100 and subsequently wake the overall system for further detection and assessment of the detected force (e.g., activity).

By using proximity sensors 346 and IMU sensors 344 in headphones 100, sensor fusion techniques can be used to have more confidence in the use state determination process, such as orientation of force, rate of force, type of force, surface feel of force (e.g., whether human skin is detected), etc. For example, if a change in force in or on headphones 100 is detected by force sensor 320, processor 340 can transmit signals to activate IMU sensor 344 and proximity sensor 346, whereupon IMU sensor 344 can be configured to detect an orientation of the force with respect to headphones 100 (for example, whether the detected change in force is from an extension of headband 102 as headphones 100 are put on or a retraction of headband 102 as headphones 100 are taken off, etc.) and proximity sensor 346 can be configured to detect a proximity of headphones 100 to a user (for example, whether human skin is detected near or against ear cushion 110).

Table 1 below provides an embodiment of typical load and sensor values which can trigger communication between force sensor 320 and processor 340.

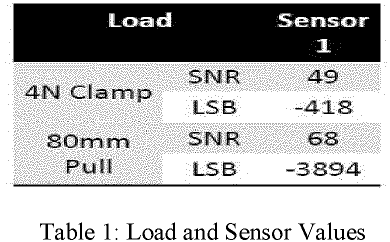

As in the example just above, force sensor 320 can be configured to detect changes in force related to extensions or retractions (or flexing) of headband 102. The values in Table 1 show that as headband 102 is extended, load output increases. In some implementations, force sensor 320 can have sufficient sensitivity to detect headband 102 extending or retracting as a user chews or speaks when wearing headphones 100, with related smaller force changes observed in slight fluctuations of LSB output. Larger force changes, such as a user taking off headphones 100, result in larger changes in the LSB output. Signal to noise ratio (SNR) indicates an efficiency of each of the plurality of sensors, measured as a ratio of amplitude of a desired signal to amplitude of noise signals at a given point in time. The higher the SNR value, the more sensitive the force sensor 320 is to perceiving changes in LSB.

Particular patterns of force may also be detected, such as a user moving one earphone unit 104 off of one ear while the other earphone unit 104 remains on the other ear, or a user moving both earphone units 104 behind, in front of, or above their ears, or on their neck. In some embodiments, force sensors 320 can detect these changes alone. In other embodiments, combinations of sensors 220 can be used to determine a use (or other) state of headphones 100 at 410, 420.

For example, it may be easier, or wear detection may be more accurate, when each of force sensors 320, IMU sensors 344, and proximity sensors 346 are used in a sensor fusion manner. Force sensors 320 can provide sensed data related to a state of headband 102 or padded portion 106 (or both). IMU sensors 344 can provide sensor data related to an orientation of headphones 100, such as whether the orientation is consistent with headphones 100 being worn on a user head and over both ears of the user, or whether headphones 100 are tilted, as they might be if removed from a user head and worn around the neck. Proximity sensors 346 can provide sensed data with respect to a relative position of each earphone unit 104 (or one or more portions thereof) and a user's head, ear(s), or other body part.

It can be seen how combining sensed data from these different sensor modalities can provide more accurate or additional information. For example, IMU sensors 344 may provide data that indicates that headphones 100 are being worn around a user's neck, and data from force sensors 320 can confirm this, if the data indicates that any force acting on headband 102 is more consistent with neck wear than over-the-ear head wear. This can be further confirmed by factoring in data from proximity sensors 346, or using proximity sensors 346 and IMU sensors 344. Thus, these and other examples can include:

**Table 2: Example feature(s) and corresponding sensor(s)**

| **Feature(s)** | **Sensor(s)** |
|---|---|
| Audio prompts are only played when the headphones are on the head | Force + proximity + IMU |
| LED is turned off when headphones are put on the head | Force + proximity + IMU |
| LED is turned on (e.g., shows status for 5 seconds) when the headphones are removed from the head | Proximity |
| Tilt to check: LED is turned on (e.g., shows status for 5 seconds) when the headphones are tilted between 35 and 145 degrees (tilting consistent with a user wanting to see the LED) | IMU (e.g., one IMU in each earphone unit of the headphones) + Proximity |
| LED is turned on (e.g., shows status for 5 seconds) if a double-tap is detected on the headphones when the headphones are not being worn | IMU |
| Robust handling: touch UI is disabled when ear(s) are not inside the earcup(s) | Proximity |
| Running mode: detect running and reduce or eliminate footfall noise/sound | IMU |
| Bluetooth handling: if the headphones are turned on (auto on/off) and ears are detected in the earcups, turn on Bluetooth; if no ears are detected in the earcups, turn off Bluetooth | Force + proximity |
| Call routing: If a call is received on a connected device (e.g., smart phone) and ears are detected in the earcups, then a hands free protocol (HFP) command is sent to route/transfer the call to the headphones; if no ears are detected (headphones are not being worn or not worn fully), then the call stays on or is routed back to the connected device | Force + Proximity |
| Automatic ANC/transparency or other noise cancelation mode: if one earcup is removed from over an ear, switch to or activate transparency mode (so the user can hear from both ears); optionally take other action, such as pausing music or sound | Proximity |

Additional technologies may be used in or with these and other features. In one example of the "tilt to check" feature, two IMUs (one in each earphone unit 104) are used along with machine learning (also discussed below) to help determine if headphones 100 are on a user's head, around a user's neck, on a table or other surface, etc. This information also can be used to check or determine if other sensors 220 might be malfunctioning or not operating.

As mentioned previously, it is also possible to combine these and other features based on sensed wear state or other activity. In one embodiment, these features are pre-programmed and selectable by a user for implementation. In other embodiments, a user can customize which feature(s) are implemented in different wear states or sensed uses.

These selections and customizations can be accomplished on an application ("app"), web-based application, or any other executable application framework operating on a user device 330 communicatively coupled with headphones 100, such as a smart phone, smart watch or other wearable such as a fitness watch or tracker, tablet, e-reader, laptop, computer, or other computing device capable of interacting with headphones 100 (such as via Bluetooth) and hosting or presenting an app to a user. The term "user device" is used herein throughout for convenience but is not limiting with respect to the actual features, characteristics, or composition of the or any device that could embody user device 330. Headphones 100 generally are configured to provide two-way data communication with user device 330 via a wired or wireless connection. In alternate embodiments, electronic devices with an earphone unit (e.g., earbuds) are configured to provide two-way data communication with user device 330 via a wired or wireless connection.

The user interface can be configured to receive user inputs and provide outputs regarding configuration and status of headphones 100, or, alternately, any electronic device featuring an earphone unit. The user interface can allow for personalized system control and calibration, such as enabling a user to calibrate one or more active use states by placing headphones in a desired position and recording sample force data. In embodiments, user device 330 can be associated with one or more user profiles that can each represent distinct feature handling requirements based on detected use state of headphones 100 or use state of any electronic device comprising an earphone unit.

Processor 340 can automatically configure one or more features of headphones 100 based at least in part on received sensor data. By processing sensed data related to the force (from force sensor 320) and orientation of force (from IMU sensor 344, in one example) applied to earcup 108 from the headband 102 alongside detected capacitance or proximity (from proximity sensor 346), processor 340 can determine if headphones 100 are on a user's head, and therefore may represent an active use instance. In alternate embodiments, processor 340 can process detected sensor data from force sensor 320, IMU sensor 344, and proximity sensor 346 to determine whether in-ear earbuds are in a user's ears, and therefore in an active use state.

In particular, a relative increase in force when headband 102 is extended (e.g., worn around or over a user's head) can be implemented within processor 340 to recognize an active use state or an inactive use state and to control features of headphones 100 accordingly. Active use states can include any situation in which a user would likely desire the headphones to produce sound, provide noise cancelling functionality, or produce other output. Inactive use states can include one or more of headphones 100 being placed on a flat surface, folded, stowed in a storage case, worn around the neck, placed on a headphone stand, or held by a user, among others.

In alternate embodiments, processor 340 can recognize the difference in force exerted on an exterior surface of an electronic device comprising an earphone unit (such as, for example, in-ear earbuds rather than over-ear headphones) to determine whether a use state is active or inactive. As indicated above, active use states can include any situation in which a user would likely desire the electronic device to produce sound or provide noise cancelling functionality. Inactive use states can include one or more of the electronic device being placed on a flat surface, folded, stowed in a case or container, placed on a stand, or held by a user, among others.

Embodiments of the present disclosure can optionally implement artificial intelligence (AI) or machine learning (ML) to better recognize patterns or changes in sensor data associated with putting on, wearing, and taking off headphones 100, earphones, or other electronic devices. Patterns or changes in, e.g., sensed forces on headphones 100 when changing use or wear states can be extracted manually or automatically by machine learning approaches such as, for example, convolutional neural networks, to produce training data that can be compared to received data during use. Accordingly, a ML model can be applied to labelled (supervised) sensor data (data representing known use state transitions) by processor 340. In embodiments, unlabeled (unsupervised) sensor data can be used although accuracy and precision of the ML model will perform comparatively worse without additional training.

With training, the ML model can better recognize when differences in sensor data may belong to use state transitions. In embodiments, the comparison process can be accomplished by computing similarity metrics using correlation or machine learning regression algorithms. For example, if the similarity of a "take off headphones" gesture is above a certain threshold, (e.g., 75%, 90%, 95% or 99% similarity) the matching process can determine that the received sensor data indicates a change of use state and features of headphones 100 can be controlled accordingly, such as powering down headphones 100.

This analysis can be improved by inclusion of feedback loops directed to classifying sensor data patterns for particular users. Alternate embodiments can include analyzing gestures pertaining to headphones 100, earphones, or other electronic devices. For example, a "take out earbuds" gesture can be above a certain threshold (as discussed earlier in the example regarding headphones 100). As more comparisons between received data and training data are made, feedback of the accuracy of previous comparisons can be tracked to better recognize future sensor data patterns.

In embodiments, processor 340 also can implement one or more classifiers to consider parameters such as type of electronic device (e.g., headphones 100 vs. earphones vs. VR goggles) and type of force sensor 320, IMU sensor 344, and proximity sensor 346.

In operation, force applied to an exterior of one or both earcups 108 by headband 102 (or a user's head or ear(s)) can automatically trigger a signal to power on IMU sensor 344 and proximity sensor 346. Force sensor 320, which can be located inside one or both earcups 108 of headphones 100 or on or in an earbud, can work alongside IMU sensor 344 and proximity sensor 346 to detect a change in force from headband 102 to earcup 108, wherein detected force can be both positive (e.g., expanding or extending headband 102/moving earcups 108 away from each other) and negative (relaxing or retracting headband 102/moving earcups 108 closer together) direction. This detected change in force can automatically trigger an electronic device such as headphones 100 to automatically power on and can also automatically trigger control of features based on an active use state, which can include (among others mentioned herein) establishing or disconnecting a Bluetooth connection of electronic devices such as headphones 100 with user device 330, enabling or disabling of user input mechanisms of electronic devices such as headphones 100 (such as a touch-based user interface), resuming or pausing media playback, changing playback volume, and changing between active noise cancellation level mode and transparency mode.

In embodiments, AI or ML systems may be included in or communicatively coupled to processor 340 to further enable headphones 100 or user device 330 to respond with one or more settings or features based on the received data from sensors, including sensors 220 in combination with data received from one or more other sources, including the user device 330 or other sources. This data can include location data, calendar data, proprioceptive data, health and wellness data, or other relevant user data. For example, one or more profiles could be created in response to the AI system's data processing to reflect a user's typical behavior, activities, or preferred settings.

Embodiments of the present disclosure accordingly provide for use state detection of electronic devices such as headphones or in-ear earbuds and improving robustness of use state detection of these devices. By combining sensor modalities and data (e.g., wear detection and force) and processing this data effectively, use of these devices can be made more convenient, including by intelligently activating or deactivating various features. This can include one or more of deactivating a touch UI, muting a microphone, silencing speakers when a device is being handled but not actively worn. This can eliminate unintentional triggers and the chance of playing music or other sound when not desired.

Other aspects of this disclosure enabling automatically powering on or off devices such as headphones, in-ear earbuds, and any similar electronic devices that is sufficiently reliable as to not require conventional means of power actuation, such as a power button, on the electronic devices. Thus, these devices can automatically turn on when put on by a user and automatically turn off or become inactive in one or more ways when removed, improving the efficiency of battery usage while simultaneously simplifying the user experience. Additionally, use state detection as described herein supports a wireless integration and does not require any additional electronics or complexity within the electronic device.

Referring to FIG. 5, a flow chart of a method for automatically controlling one or more features of an electronic device such as over-ear headphones is depicted according to an embodiment. In embodiments, headphones 100 or any electronic devices with earphone units 104 (e.g., earbuds or in-ear earphones) can implement this method, with headphones 100 used as an example in the following discussion of FIG. 5.

At 510, a wear state of headphones 100 is detected, and one or more features of headphones 100 can be set according to the detected state at 520. If an active use state upon detecting wear is determined, headphones 100 can be powered on and selected features can be enabled. For example, a Bluetooth connection with a remote user device (330) can be established.

A change in the wear state of headphones 100 can be detected in a further iteration of the method (returning to 510). This can include the user pulling the earcups 108 away from each other in order to pull them away from the ears and head as the user removes headphones 100 entirely. At the same time an IMU sensor can detect the orientation of the motion of force (i.e., detect "lowering" of electronic devices such as headphones 100) or an orientation of headphones 100 in space. In addition, proximity sensors can be configured to detect that electronic devices such as headphones 100 are not proximal to human skin for at least a preset threshold period (e.g., 5 seconds). The sensors can transmit their respective sensed data to processor 340 for processing, such that sensor fusion can be implemented in processor 340 to more accurately determine that headphones 100 are in the process of being removed or no longer being worn over a user's ears.

Based on this, one or more features of headphones 100 can be set to an inactive state (at 520, as the method iterates). This can include automatically disabling selected features in accordance with an inactive use state, including disablement of certain features to conserve battery charge and to provide a better user experience, such as Bluetooth audio, touch UI, and pausing playback. This can also (i.e., after some period of non-wear) or instead include powering down the device.

Both active and inactive use states can include a variety of substates that each represent a particular type of use or nonuse. In one example, different sensor modalities can transmit different sensor data to processor 340 to process, and the result can be a substate of nonuse in which headphones 100 are determined to be "laying on a surface." This can result in certain features of headphones 100 being deactivated or paused, but without headphones 100 being completely powered off. In another example, processor 340 may determine based on received sensor data that headphones 100 are being held in a user's hands. In such a substate that may indicate a user is about to use headphones 100, certain features can be selectively activated or be prepped such that an active use state can be entered more quickly. For example, a Bluetooth connection with user device 330 can be maintained but playback can be paused. Other inactive or in-between use substates can include one or more of "folded," "stowed," "around the neck," "on a stand," and "on a headphone stand."

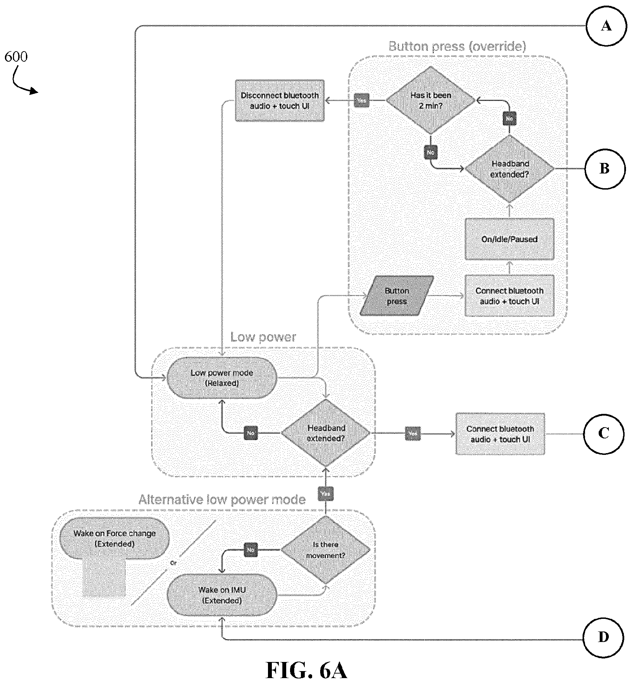

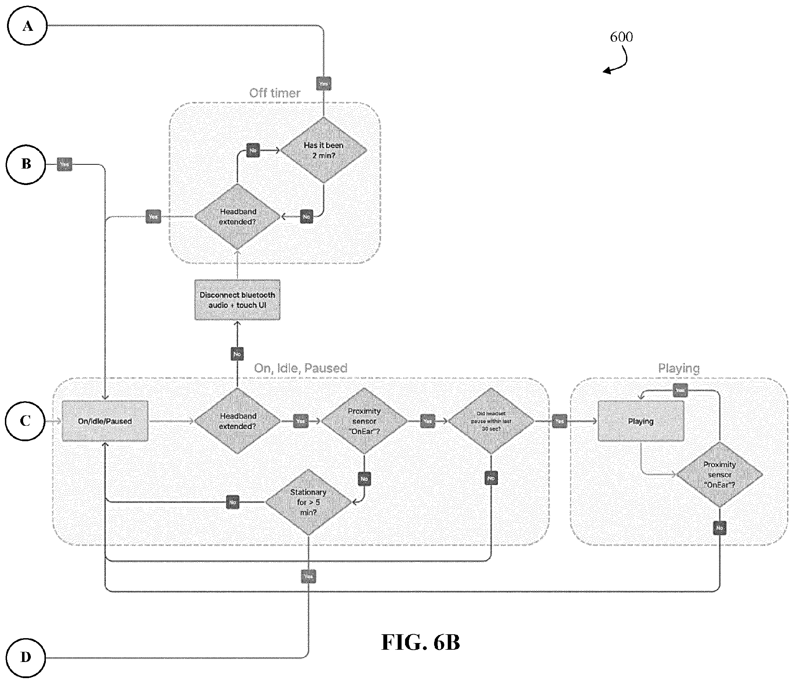

Figures 6A and 6B are a flowchart of a method 600 for detecting use states according to an embodiment. Stowing away headphones 100 for storage in a storage case can trigger force sensor 320 to detect some slight force exerted against it, the motion of the predetermined configured collapsibility of headphones 100 may trigger IMU sensor 344 such that processor 340 causes headphones 100 to power down. Similarly, processor 340 can cause headphones 100 to power down if data from IMU sensor 344 detects motion consistent with headphones 100 being in tote bag or backpack. A myriad of other implementations are possible.

Various embodiments of this disclosure can have particular advantages for use with devices that have "active" surfaces (e.g., external, touch-sensitive user interface features). Generally speaking, the term "active" is defined as a surface configured to detect touch or contact with a user or defined input feature (e.g., a stylus) and the term "inactive" is defined as a surface that is not capacitive, pressure sensitive, or otherwise arranged to detect touch through delivery of a signal.

Active surfaces can enable force sensor 320 to diligently detect even seemingly small forces. Force sensor 320 also can be configured to detect force exerted on inactive surfaces, such as detecting force outwardly exerted on headband 102 as headband 102 extends or retracts, which can originate from the user as s/he places headphones 100 on the head or detecting force outwardly exerted on an ear tip of an earbud as a user places earbuds in their ears.

Active surfaces may be configured to be especially sensitive to certain types of touch or material. In one embodiment, headphones 100 may have at least one active surface arranged such that when the user places headphones 100 atop their head the active surface directly touches the ear of the user. Such a configuration enhances the ability of processor 340 to get sensor data regarding the use state of headphones 100. Here, capacitive touch sensors of the active surface may be configured to detect human skin, such as the ear of the user. Thus, the active surface can be on one or both ear cushions 110, elsewhere on one or both earcups 108, on headband 102, etc. Processor 340 may use data from these sensors in combination with data from force sensor 320 regarding whether headband 102 is extended or not extended to determine a use state of headphones 100. If human skin is detected by the active surface and if the force sensor 320 detects force from extension of headband 102, processor 340 may determine an active use state and may automatically power on headphones 100 and enable selected features. If either human skin is not detected by the active surface, or if force sensor 320 does not detect relevant force, then processor 340 may automatically determine an inactive use state.

The following clauses are part of the present disclosure:
Clause 1: A system for improving robustness of use state detection of an electronic device, the system comprising: a plurality of sensors comprising: at least one first sensor arranged to obtain a first type of data about the electronic device, and at least one second sensor arranged to obtain a second type of data about the electronic device, the second type of data being different from the first type of data; and at least one processor coupled to receive the first type of data from the at least one first sensor and the second type of data from the at least one second sensor and, from the first type of data and the second type of data, to: determine a current use state of the electronic device, and compare the current use state to a previous use state of the electronic device, if the current use state is different from the previous use state, change a status of at least one feature of the electronic device based on the current use state, and if the current use state is the same as the previous use state, maintain a status of at least one feature of the electronic device.
Claim 2: The system of clause 1, wherein the plurality of sensors further comprises at least one third sensor arranged to obtain a third type of data about the electronic device, the third type of data being different from the first type of data and the second type of data; and the at least one processor is coupled to receive the third type of data from the at least one third sensor and to determine a current use state of the electronic device from the first type of data, the second type of data, and the third type of data.
Clause 3: The system of clause 2, wherein the first sensor is a force sensor, the second sensor is an inertial measurement unit (IMU) sensor, and the third sensor is a proximity sensor.
Clause 4: The system of any of clauses 1-3, wherein the electronic device comprises headphones having a first earphone unit and a second earphone unit, the at least one first sensor comprises two inertial measurement units (IMUs) with a first one of the two IMUs being arranged in or on the first earphone unit and a second one of the two IMUs being arranged in or on the second earphone unit.
Clause 5: The system of any of clauses 1-4, wherein the at least one processor is configured to use machine learning to determine the current use state of the electronic device from at least the first type of data.
Clause 6: The system of any of clauses 1-5, wherein: the current use state of the electronic device is an active use state, the previous use state is an inactive use state, and changing a status of at least one feature of the electronic device based on the current use state includes activating at least one feature of the electronic device; or the current use state of the electronic device is an inactive use state, the previous use state is an active use state, and changing a status of at least one feature of the electronic device based on the current use state includes deactivating at least one feature of the electronic device.
Clause 7: The system of any of clauses 1-6, wherein the electronic device comprises the system such that the at least one processor and the plurality of sensors are arranged on or in the electronic device.
Clause 8: The system of clause 6 or clause 7, wherein: the electronic device comprises headphones, the active use state is the headphones being worn on a head and over both ears of a user, and the inactive state is the headphones not being worn over both ears of the user; or the electronic device comprises at least one earbud, the active use state is the earbud being worn in an ear of a user, and the inactive state is the earphone not being worn in an ear of the user.
Clause 9: A method for improving robustness of use state detection of an electronic device, the method comprising: obtaining a first type of data about the electronic device; obtaining a second type of data about the electronic device, the second type of data being different from the first type of data; determining a current use state of the electronic device from the first type of data and the second type of data; comparing the current use state to a previous use state of the electronic device; if the current use state is different from the previous use state, changing a status of at least one feature of the electronic device based on the current use state; and if the current use state is the same as the previous use state, maintaining a status of at least one feature of the electronic device.
Clause 10: The method of clause 9, further comprising: obtaining a third type of data about the electronic device, the third type of data being different from the first type of data and the second type of data; wherein determining the current use state of the electronic device comprises using the first type of data, the second type of data, and the third type of data.
Clause 11: The method of clause 10, wherein: obtaining a first type of data about the electronic device comprises obtaining data of a force acting on the electronic device; obtaining a second type of data about the electronic device comprises obtaining data about the electronic device from at least one inertial measurement unit (IMU) sensor; and obtaining a third type of data about the electronic device comprises obtaining data about the electronic device from at least one proximity sensor.
Clause 12: The method of any of clauses 9-11, wherein: determining a current use state of the electronic device comprises determining that the electronic device is in an active state; and determining that the current use state is different from the previous use state such that changing a status of at least one feature of the electronic device based on the current use state includes activating at least one feature of the electronic device.
Clause 13: The method of any of clauses 9-12, wherein: determining a current use state of the electronic device comprises determining that the electronic device is in an inactive state; and determining that the current use state is different from the previous use state such that changing a status of at least one feature of the electronic device based on the current use state includes deactivating at least one feature of the electronic device.
Clause 14: The method of clause 12 or clause 13, wherein the electronic device comprises headphones, the active state is the headphones being worn on a head and over both ears of a user, and the inactive state is the headphones not being worn over both ears of the user.
Clause 15: The method of clause 12 or 13, wherein the electronic device comprises at least one earbud, the active state is the earbud being worn in an ear of a user, and the inactive state is the earphone not being worn in an ear of the user.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that means plus function interpretation be applied unless the specific terms "means for" or "step for" are recited in a claim.

## Claims

1. A system for improving robustness of use state detection of an electronic device, the system comprising:
a plurality of sensors comprising:
at least one first sensor arranged to obtain a first type of data about the electronic device, and
at least one second sensor arranged to obtain a second type of data about the electronic device, the second type of data being different from the first type of data; and
at least one processor coupled to receive the first type of data from the at least one first sensor and the second type of data from the at least one second sensor and, from the first type of data and the second type of data, to:
determine a current use state of the electronic device, and
compare the current use state to a previous use state of the electronic device,
if the current use state is different from the previous use state, change a status of at least one feature of the electronic device based on the current use state, and
if the current use state is the same as the previous use state, maintain a status of at least one feature of the electronic device.

2. The system of claim 1, wherein:
the plurality of sensors further comprises at least one third sensor arranged to obtain a third type of data about the electronic device, the third type of data being different from the first type of data and the second type of data; and
the at least one processor is coupled to receive the third type of data from the at least one third sensor and to determine a current use state of the electronic device from the first type of data, the second type of data, and the third type of data.

3. The system of claim 2, wherein the first sensor is a force sensor, the second sensor is an inertial measurement unit (IMU) sensor, and the third sensor is a proximity sensor.

4. The system of any of claims 1-3, wherein the electronic device comprises headphones having a first earphone unit and a second earphone unit, the at least one first sensor comprises two inertial measurement units (IMUs) with a first one of the two IMUs being arranged in or on the first earphone unit and a second one of the two IMUs being arranged in or on the second earphone unit.

5. The system of any of claims 1-4, wherein the at least one processor is configured to use machine learning to determine the current use state of the electronic device from at least the first type of data.

6. The system of any of claims 1-5, wherein:
the current use state of the electronic device is an active use state, the previous use state is an inactive use state, and changing a status of at least one feature of the electronic device based on the current use state includes activating at least one feature of the electronic device; or
the current use state of the electronic device is an inactive use state, the previous use state is an active use state, and changing a status of at least one feature of the electronic device based on the current use state includes deactivating at least one feature of the electronic device.

7. The system of any of claims 1-6, wherein the electronic device comprises the system such that the at least one processor and the plurality of sensors are arranged on or in the electronic device.

8. The system of claim 6 or claim 7, wherein:
the electronic device comprises headphones, the active use state is the headphones being worn on a head and over both ears of a user, and the inactive state is the headphones not being worn over both ears of the user; or
the electronic device comprises at least one earbud, the active use state is the earbud being worn in an ear of a user, and the inactive state is the earphone not being worn in an ear of the user.

9. A method for improving robustness of use state detection of an electronic device, the method comprising:
obtaining a first type of data about the electronic device;
obtaining a second type of data about the electronic device, the second type of data being different from the first type of data;
determining a current use state of the electronic device from the first type of data and the second type of data;
comparing the current use state to a previous use state of the electronic device;
if the current use state is different from the previous use state, changing a status of at least one feature of the electronic device based on the current use state; and
if the current use state is the same as the previous use state, maintaining a status of at least one feature of the electronic device.

10. The method of claim 9, further comprising:
obtaining a third type of data about the electronic device, the third type of data being different from the first type of data and the second type of data;
wherein determining the current use state of the electronic device comprises using the first type of data, the second type of data, and the third type of data.

11. The method of claim 10, wherein:
obtaining a first type of data about the electronic device comprises obtaining data of a force acting on the electronic device;
obtaining a second type of data about the electronic device comprises obtaining data about the electronic device from at least one inertial measurement unit (IMU) sensor; and
obtaining a third type of data about the electronic device comprises obtaining data about the electronic device from at least one proximity sensor.

12. The method of any of claims 9-11, wherein:
determining a current use state of the electronic device comprises determining that the electronic device is in an active state; and
determining that the current use state is different from the previous use state such that changing a status of at least one feature of the electronic device based on the current use state includes activating at least one feature of the electronic device.

13. The method of any of claims 9-12, wherein:
determining a current use state of the electronic device comprises determining that the electronic device is in an inactive state; and
determining that the current use state is different from the previous use state such that changing a status of at least one feature of the electronic device based on the current use state includes deactivating at least one feature of the electronic device.

14. The method of claim 12 or claim 13, wherein the electronic device comprises headphones, the active state is the headphones being worn on a head and over both ears of a user, and the inactive state is the headphones not being worn over both ears of the user.

15. The method of claim 12 or 13, wherein the electronic device comprises at least one earbud, the active state is the earbud being worn in an ear of a user, and the inactive state is the earphone not being worn in an ear of the user.
